# EUROPEAN PATENT SPECIFICATION

(11) **EP 1 598 311 B1**
(45) Date of publication and mention of the grant of the patent: **11.07.2007**
(21) Application number: 04388034.3
(22) Date of filing: 18.05.2004
(51) Int. Cl.: B67D 3/00

(54) **Dosing device for mounting on a container**
Dosiervorrichtung zur Behältermontage
Dispositif de dosage pour equipper un conteneur

(43) Date of publication of application: 23.11.2005
(73) Proprietor: Dannemose, Per Henrik, 4000 Roskilde (DK)
(72) Inventor: Jensen, Bjoern Slot, 4600 Koege (DK); Lindberg, Frank, 2670 Greve (DK); Lindberg, Peter, 2670 Greve (DK)
(74) Representative: Olsen, Lau Lund

(56) References cited:
- EP-A- 1 227 058
- US-A- 4 288 009
- US-A- 5 097 991

## Description

The present invention relates to a dosing device for mounting on a container, the dosing device comprising a dosing chamber associated with a liquid inlet valve for communication with the container and a liquid outlet valve for communication with a mouth of an outlet spout, the outlet spout being arranged adjacent to and having a substantially smaller outer diameter than the dosing chamber, each said valve having a valve body being displaceable between a closed position and an open position by displacement of an armature located in the outlet spout, the armature being displaceable by means of a magnetic field generated by an electromagnetic coil in which the spout may be inserted, the dosing device being operable between a charging state, in which the liquid inlet valve is open, and the liquid outlet valve is closed, and a dispensing state, in which the liquid inlet valve is closed, and the liquid outlet valve is open, and the dosing chamber being provided with an air inlet for communication with the surroundings during the dispensing state of the dosing device.

US 5,097,991, which discloses a device according to the preamble of claim 1, describes a dosing device for liquids having a main body comprising a dosing chamber and an outlet spout and being adapted to be mounted in a fixed position on a support. In the dosing chamber, upper and lower valve plates are arranged on a stem that is vertically displaceable by means of a magnetizable armature located in the outlet spout, whereby the valve plates may open and close a liquid inlet and outlet, respectively. In order to prevent dripping, a further valve member is mounted on the lower end of the armature to close the mouth of the spout. An expansion chamber is disposed above the dosing chamber and communicates with the latter to enable relief of the dosing chamber in the event that the contents of a bottle mounted on the dosing device expand because of changing temperature conditions. A permanently open tube leads from the top of the dosing chamber to the top of the expansion chamber, and the expansion chamber has an opening to the surroundings, so that air from the surroundings may replace the liquid when emptying the dosing chamber. Furthermore, relief openings are provided between the bottom of the expansion chamber and the dosing chamber in order to allow the expansion chamber to be emptied of liquid after an expansion of liquid in the bottle. The relief openings are closed by the upper valve plate in the dispensing state of the device, whereby it is prevented that surplus liquid in the expansion chamber is dispensed together with the dosed quantity from the dosing chamber.

However, the structure of this known dosing device is very complicated and thus expensive. Furthermore, because of the permanently open connection between the dosing chamber and the expansion chamber, the solution cannot be applied to a dosing device that is not mounted in a fixed position, because liquid then would be able to leak through the expansion chamber to the surroundings. In the catering trade, it is often desired, however, that each bottle be provided with a dosing device sealed onto the bottle to ensure registration of all dispensing. In this connection, it is necessary to have a store of bottles fitted with dosing devices, which will normally be kept upside-down relative to the dispensing position. Moreover, the expansion chamber results in a bulky device and is not satisfactory in terms of hygiene requirements, as a surplus quantity of liquid will be continuously in contact with the surrounding air, and as the device is difficult to clean. In addition, when a store of bottles fitted with dosing devices is kept, a simple and thus inexpensive structure of the device is desired. In consideration of an attractive design, emphasis is also on a structure of small dimensions.

US 4,598,845 describes a dosing apparatus for dispensing of liquid from a bottle. The dosing apparatus has the form of a cylindrical housing to be mounted on the bottle and inserted into an electric coil for actuation of a displaceable armature located in a dosing chamber inside the housing. By means of appropriately dimensioned pressure springs, the armature is connected to an inlet valve body and an outlet valve body, so that, at displacement of the armature, firstly, the inlet valve is closed, secondly the outlet valve is opened, and finally an air intake valve is opened. In this way, the above-mentioned problem of a possible liquid expansion in the bottle is met, because the inlet valve is closed before the outlet valve is opened, whereby an overpressure in the bottle will not result in liquid splashing through the dosing chamber or too much liquid being dispensed. However, the structure of this apparatus is very bulky and therefore costly. In addition, the upward movement of the armature has a tendency to lift the dosing apparatus and bottle out of its position in the electric coil at dispensing.

Furthermore, as the dosing chamber is located in the housing that is inserted in the electric coil, a very large coil is necessary, thereby adding considerably to the costs of the apparatus. Whereas known dosing devices have been designed to generally be used in connection with a few coils, such as four to six coils, the trend is now growing towards large panels of bottle holders provided with coils, wherein bottles fitted with dosing devices may hang upside-down permanently. Such panels may comprise coils in numbers as large as up to around 200, or even more, if appropriate. Consequently, the price of each coil is very important for the overall costs of the dispensing system.

GB 2 152 477 describes a liquid dispenser fitted to an inverted bottle to deliver a measured quantity of liquid on each actuation, this quantity being visible in a flask. A valve within the flask is normally in a lowered position closing off the discharge outlet, a vent also being closed, but when raised these are opened while the mouth of the bottle is blocked. The valve located in the flask is actuated through a lever by means of an armature displaced by means of a solenoid, said lever and armature being located outside the flask. However, the solenoid necessary to actuate the valve has a size approximately equivalent to the size of the flask, whereby the entire liquid dispenser is very bulky and has to be mounted in a fixed position.

The object of the present invention is to provide a dosing device that is simpler and more compact than prior-art devices.

In view of this object, the spout comprises two armatures adapted to influence each other by means of a magnetic force, and the air inlet of the dosing chamber is provided with an air intake valve having a valve body operable between a closed position in the charging state of the dosing device and an open position in the dispensing state of the dosing device.

By employing two armatures adapted to influence each other by means of a magnetic force, the device may be designed very compact and simple, and nevertheless obtain a very large actuation force for the valves, thereby achieving a fast actuation of the valves. This, in combination with the air intake valve of the dosing chamber being adapted to close in the charging state of the dosing device, ensures that a possible overpressure in the container, on which the device is mounted, will be substantially maintained in the container and not result in excess liquid flowing out through the dosing device. Moreover, the dosing device may be turned upside-down without liquid leaking to the surroundings.

In an embodiment, the diameter of the valve body of the liquid outlet valve is smaller than the outer diameter of the outlet spout. The small diameter of the valve body further accelerates the actuation of the valve due to smaller viscous resistance from the liquid.

In an embodiment, a free passage is provided between the dosing chamber and the outlet spout in the charging state of the dosing device. Thereby, the spout may contribute to the volume of the dosing chamber, so that the total device may be even more compact.

In an embodiment, the valve body of the liquid outlet valve is located at the mouth of the outlet spout. Thereby, dripping from the spout in the charging state of the device may be minimized.

In an embodiment, the valve body of the liquid inlet valve and the valve body of the air intake valve are arranged concentrically. Thereby, the closing and opening forces for the valve bodies may be applied symmetrically and thereby utilized more efficiently, so that smaller armatures and consequently smaller overall dimensions of the dosing device may be obtained.

In an embodiment, the valve body of the liquid inlet valve has the form of a ring, and the valve body of the air intake valve is arranged at the centre of the valve body of the liquid inlet valve. Thereby, the required flow area of the liquid inlet valve may be obtained with a smaller stroke of said valve, thereby further shortening the actuation time.

In an advantageous embodiment in terms of manufacture, a valve seat for the valve body of the liquid inlet valve is provided in a top wall of the dosing chamber in the form of an outer ring seat and an inner ring seat defining a liquid inlet opening there between, the liquid inlet opening communicating with a mounting portion of the dosing chamber to be inserted in a neck of the container, and a valve seat for the valve body of the air intake valve is arranged around an air intake opening arranged centrally in the inner ring seat of the liquid inlet valve, the air intake opening communicating with the surroundings through an air channel arranged in a cross-member extending radially at the top wall of the dosing chamber. In this way, the dosing chamber with its top wall comprising the valve seats may be cast in one piece and for instance injection-moulded.

In an embodiment, the air channel arranged in the cross-member opens into a peripheral channel arranged in the outer side of the top wall of the dosing chamber, the peripheral channel communicating with the surroundings through an opening located at a distance, in the direction of the peripheral channel, from the opening of the radial air channel. Because of the separation of the opening to the surroundings and the opening of the radial air channel in the direction of the peripheral channel, it is avoided that possible drops of liquid from the air intake valve may splash to the outside of the dosing device, as such drops will be retained in the peripheral channel.

In an embodiment, the armatures are biased away from each other by means of a compression spring.

In an embodiment, the armatures are guided between longitudinal ribs in the outlet spout. Thereby, channels for passage of the liquid through the spout may be provided between the ribs.

In an embodiment, the valve body of the liquid inlet valve and the valve body of the liquid outlet valve are fixed to at least one common rod displaceable by means of a first one of the two armatures. This provides for a simple and compact structure of the dosing device.

In an embodiment, the valve body of the air intake valve is fixed to a rod displaceable by means of a second one of the two armatures. Thereby, a particularly large actuation force may be applied to the air intake valve, thereby avoiding that the valve body of the air intake valve sticks to its seat as a result of a sticky liquid.

In an embodiment, the first armature is connected with the valve body of the liquid inlet valve by means of at least two rods located around the central rod and received in grooves in the second armature. Thereby, a uniform distribution of the actuation forces between the armatures and their respective valve bodies is achieved, whereby a smooth operation of the dosing device is facilitated.

In an embodiment, the second armature has a collar adapted to abut a projection at the outlet spout in the dispensing state of the dosing device, thereby limiting the displacement of the second armature. When the collar abuts the projection, further displacement of the armatures towards each other may provide the necessary sealing force between the liquid inlet valve and its seat.

In an embodiment, the valve body of the liquid inlet valve is displaceable by means of the second armature, and the valve body of the liquid outlet valve is displaceable by means of the first armature. Thereby the liquid inlet valve and the liquid outlet valve may be opened substantially simultaneously, which may be desirable under certain circumstances.

In an embodiment, a magnetizable third armature is fixed stationarily in the outlet spout between the first armature and the second armature. By appropriate arrangement of the armatures in the longitudinal direction of the outlet spout in their rest position, the opening order of the valves may be predetermined.

The armatures may be arranged in the outlet spout in such a way that, in the rest position of the armatures, when the spout is inserted in the coil, the armature of the liquid outlet valve is placed outside the electromagnetic coil, whereby the liquid inlet valve may be caused to close before the liquid outlet valve opens. The same may be achieved if the mass of the armature of the liquid outlet valve is smaller than the mass of the armature of the liquid inlet valve. The effect of this achievement may be considerably enhanced, if the current through and/or the voltage across the coil is increased step by step at the actuation of the dosing device. This opening sequence may be an advantage, if an extreme overpressure may occur in the container, so that splashing of liquid through the dosing chamber is prevented. However, such overpressure is normally not a problem.

According to the invention, there is furthermore provided a system for dispensing of liquor or the like, comprising a bottle holder with an electromagnetic coil and a dosing device as described above for insertion in the coil, as well as a data processing unit for control of the magnetic field of the coil for dispensing of predefined quantities of liquid and for registration of the number of drinks dispensed.

The invention will now be explained in more detail below by means of examples of embodiments with reference to the schematic drawing, in which
Fig. 1 is a side view of a panel of bottle holders 4 for the support of bottles provided with dosing devices according to the invention,
Fig. 2 is a top view of the panel of bottle holders in Fig. 1,
Fig. 3 is an axial section of a dosing device according to the invention, shown in the charging state of the dosing device,
Fig. 4 is an axial section of the dosing device in Fig. 3 along the line IV-IV, in the dispensing state of the dosing device,
Figs. 5 and 6 are axial sections of another embodiment of the dosing device, shown in the charging state and the dispensing state, respectively, of the dosing device,
Figs. 7 and 8 are axial sections of another embodiment of the dosing device, shown in the charging state and the dispensing state, respectively, of the dosing device,
Fig. 9 is an axial section of another embodiment of the dosing device in the charging state,
Fig. 10 is an axial section of the dosing device in Fig. 9, shown in an intermediate state between the charging state and the dispensing state,
Fig. 11 is an axial section of the dosing device along the line XI-XI in Fig. 9, shown in the dispensing state of the dosing device,

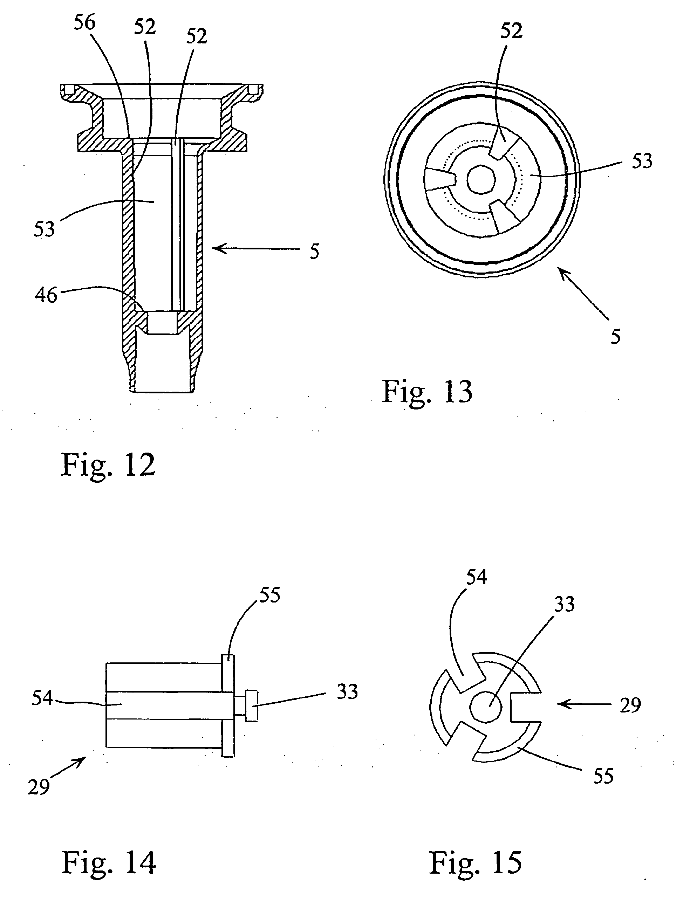

Fig. 12 is an axial section of the outlet spout of the dosing device in Figs. 3 and 4,
Fig. 13 is a top view of the outlet spout in Fig. 12,
Fig. 14 is a side view of the uppermost armature of the dosing device in Figs. 3 and 4,
Fig. 15 is a top view of the armature in Fig. 14,
Fig. 16 is a bottom view of the dosing chamber of the dosing device in Figs. 3 and 4,
Fig. 17 is a side view of the dosing chamber in Fig. 16, and
Fig. 18 is a top view of the dosing chamber in Fig. 17.

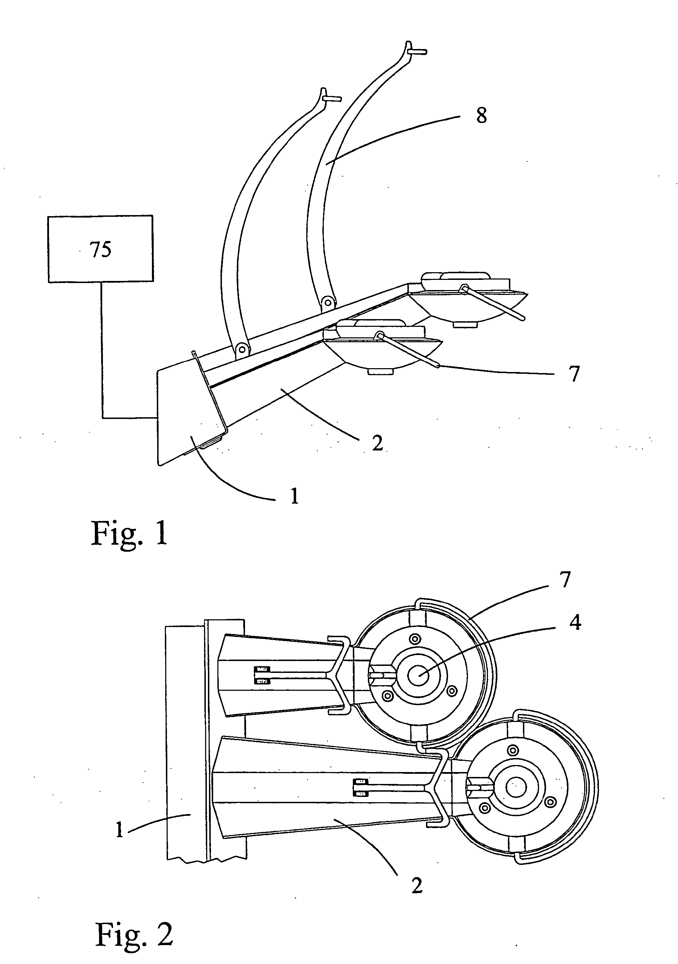

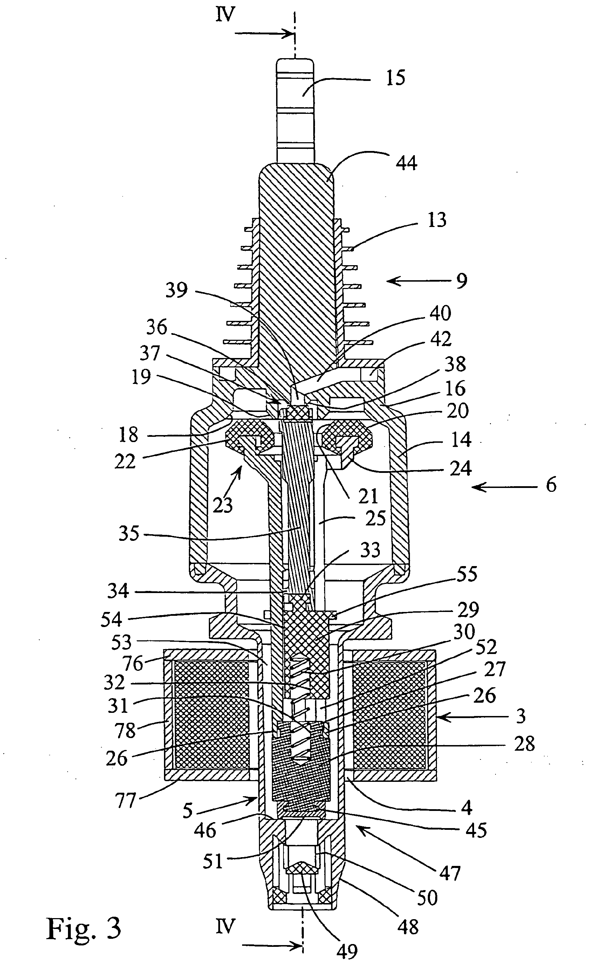

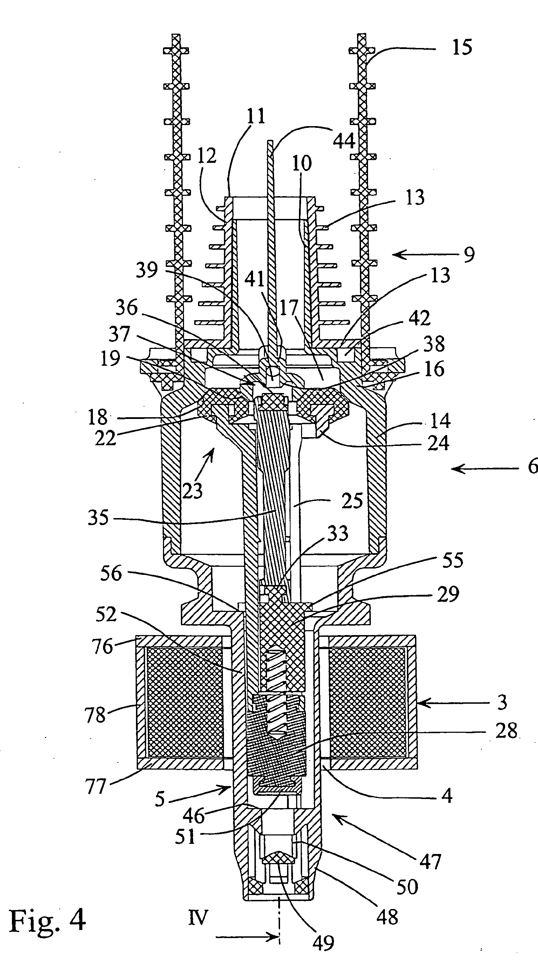

Fig. 1 is a side view of a panel 1 comprising several bottle holders 2, of which only two are shown, provided with an electromagnetic coil 3, shown in Figs. 3 and 4, located around a central opening 4 in the bottle holder 2. An outlet spout 5 of a dosing device 6 according to the invention, mounted on the neck of a bottle, may be inserted into the opening 4 from above, so that the bottle may be supported upside down on the bottle holder 2. In this position, the spout 5 will project from the bottom side of the bottle holder 2, so that liquor may be dispensed from the spout 5 upon activation of the electromagnetic coil 3. The activation of the coil 3 may be initiated by pressing a switch in the form of a lever arm 7 on the bottle holder 2. The bottle holders 2 are provided with supplementary support arms 8 for the bottles.

The dosing device according to the invention is not only suitable for dispensing of liquor, but can advantageously be applied for many different purposes where accurate dispensing of liquid from a container is desired.

The dosing device may be controlled by means of a data processing unit indicated schematically in Fig. 1 by the reference numeral 75. The data processing unit 75 may, for instance, comprise a personal computer and appropriate hardware for the interface between the computer and the bottle holder, which comprises the electromagnetic coil, the switch in the form of the lever arm 7, and possibly a not shown lamp for the indication of dispensing taken. The parts constituting the data processing unit 75 may be located at any place suitable in relation to the bottle holder.

Referring now to Figs. 3 and 4, a dosing chamber 14 is provided with a mounting portion 9 comprising an inner tube 10 that is injection-moulded integrally with the dosing chamber 14 and has a slightly decreasing outside diameter in the upward direction from the dosing chamber 14. The mounting portion 9 furthermore comprises a sealing member 11 made from elastic material and elastically engaging the outside of the tube 10 of the dosing chamber 14. The sealing member 11 comprises an inner tube 12 provided with a number of circumferential, elastic flaps 13 spaced along the axial direction of the tube 12 and having decreasing diameters in the upward direction, thereby facilitating the insertion into a bottle neck and the sealing securing in the bottle neck. The dosing chamber 14 is provided with upwardly extending serrated straps 15 that may be locked to the bottle neck by means of a not shown band, such as a specially marked, easily identifiable band, whereby unauthorized dispensing is prevented.

The dosing chamber 14 has a substantially cylindrical configuration and is preferably made of transparent material, so that it may be verified that the dosing chamber is full of liquid before dispensing. The dosing chamber 14 has a top wall 16 with an annular liquid inlet opening 17 to the inside of the dosing chamber 14, said opening communicating with the tube 10 of the mounting portion 9 to be inserted into a bottle neck. The liquid inlet opening 17 is defined between an outer tapered ring seat 18 and an inner tapered ring seat 19, said ring seats 18, 19 corresponding to outer and inner sealing surfaces 20, 21 of an annular valve body 22 of a liquid inlet valve 23. The valve body 22 is made from an elastic material and pressed into engagement with a ring section 24 having a T-shaped cross section. The ring section 24 is by means of three longitudinally extending rods 25 connected to an engagement ring 26 pressed into engagement with a shoulder 27 of a first armature 28 located in the bottom of the dosing spout 5. The ring section 24, the longitudinal rods 25 and the engagement ring 26 are all injection-moulded integrally.

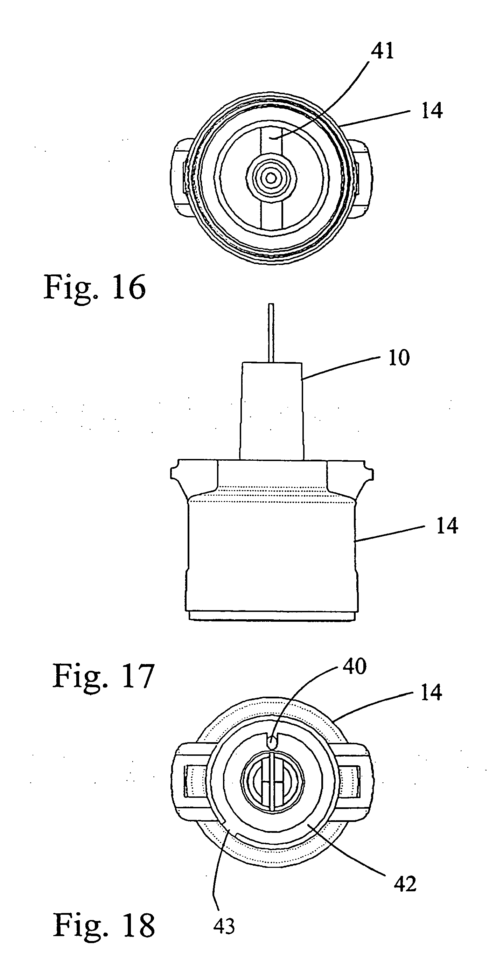

The first armature 28 is biased away from a second armature 29 by means of a pressure spring 30 located in central bores 31, 32 of the armatures. The second armature 29 has an upper projection 33 having a T-shaped cross section that engages with a corresponding recess 34 arranged in the lower end of a central, longitudinally extending rod 35, the upper end of which is provided with a valve body 36 of an air intake valve 37. In Fig. 3 the valve body 36 is shown closing against a valve seat 38 arranged concentrically in the central part of the annular valve seat 19 of the liquid inlet valve 23 in the top wall 16 of the dosing chamber 14. An air intake opening 39 of the air intake valve 37 communicates with the surroundings through an air channel 40 arranged in a cross member 41 extending radially at the top wall 16 of the dosing chamber. The radial air channel 40 opens into a peripheral channel 42 arranged in the top side of the top wall 16 of the dosing chamber 14 and being closed in upward direction by means of the lowermost of the circumferential flaps 13. The peripheral channel 42 has an opening 43 to the surroundings that is displaced in the direction of the peripheral channel 42 from the opening of the radial channel 40 in order to avoid possible splashes of liquid from the air intake valve exiting through the opening 43, see Fig. 18.

In order to facilitate the flow of liquid from the bottle into the dosing chamber 14, the tube 10 of the mounting section 9 is provided with a central partition wall 44 separating the liquid inlet in two parts, so that air will easier enter the bottle when liquid is flowing out.

The first armature 28 is at its bottom side provided with a projection 45 having a T-shaped cross section, over which a valve body 51 of a liquid outlet valve 47 grips. The valve body 51 is made of elastic material and is in Fig. 3 shown in a position closing against a corresponding valve seat 46 of the liquid outlet valve 47. A mouth 48 of the outlet spout 5 has an internal tamper shield 49 mounted by means of ribs 50, so that the valve body 51 is inaccessible from the outside of the outlet spout 5.

The outlet spout 5 is provided with internal longitudinally extending ribs 52 guiding the armatures 28, 29 and providing channels 53 through which the liquid may flow to the mouth 48 of the outlet spout 5. The second armature 29 is provided with longitudinal grooves 54 sliding over the rods 25 connecting the valve body 22 of the liquid inlet valve 23 with the first armature 28. Furthermore, the second armature 29 is provided with an upper projecting collar 55 that, in the dispensing state of the dosing device, abuts a projection 56 at the upper part of the outlet spout, thereby ensuring that the valve body 22 of the liquid inlet valve 23 is provided with sufficient closing force in the dispensing state, see Fig. 4. The projection 56 is constituted by the upper end of the longitudinal ribs 52.

Fig. 3 shows the dosing device in the charging state, whereby the liquid outlet valve 47 is closed, the liquid inlet valve 23 is open, and the air intake valve 37 is closed. In this state, the dosing chamber 14 is charged with liquid from the not shown bottle through the liquid inlet valve until the dosing chamber is full of liquid. As liquid fills up the dosing chamber, air present in the dosing chamber flows into the bottle and replaces the liquid flowing out from the bottle. As the air intake valve 37 is closed, a possible overpressure in the bottle will not result in liquid flowing out through the air intake valve 37.

Fig. 4 shows the dosing device in the dispensing state, whereby the liquid outlet valve 47 is open, the liquid inlet valve 23 is closed, and the air intake valve 37 is open. In this state, the dose of liquid present in the dosing chamber 14 flows through the outlet spout 5, the liquid outlet valve 47 and the mouth 48, whereby the dosing chamber is filled with air entering through the air inlet valve 37. Because of the strong attraction force between the armatures 28, 29 at the actuation of the electromagnetic coil 3, the transition between the charging state shown in Fig. 3 and the dispensing state shown in Fig. 4 is very fast, and consequently a possible overpressure in the bottle will not cause the liquid in the dosing chamber to splash out through the mouth 48. Normally, liquid will not even enter the air channel 40 communicating with the air intake valve 37. However, if a few drops of liquid should exit through the air intake valve 37, the liquid will be retained in the peripheral channel 42. Additionally, it should be mentioned that the fast transition between the charging state and the dispensing state, and especially the opening of the air intake valve by means of a separate armature, ensures a calm and quiet dispensing of the liquid from the outlet spout. Furthermore, the attraction between the two armatures, resulting in displacement against each other, equilibrates the dosing device and bottle upon actuation, so that these will not jump out of the bottle holder.

The electromagnetic coil 3 is lined by means of a metal plating comprising a top plating 76, a bottom plating 77 and an circumferential plating 78, whereby the magnetic field generated by the coil, in a manner known per se, is concentrated in the outlet spout 5 at the level of the top plating and at the level of the bottom plating. Therefore, the armatures 28, 29 are preferably located at the level of the top plating 76 and at the level of the bottom plating 77, respectively, in order to obtain a stronger magnetic force between the armatures 28, 29, when these are actuated. Preferably, in the charging state, whereby the armatures 28, 29 are in the initial position for their actuation, each armature is placed with its centre in the longitudinal direction at the level of its respective plating 76, 77. If a stronger actuation force is not required, a smaller coil 3 may be employed as a result of said preferable location of the armatures.

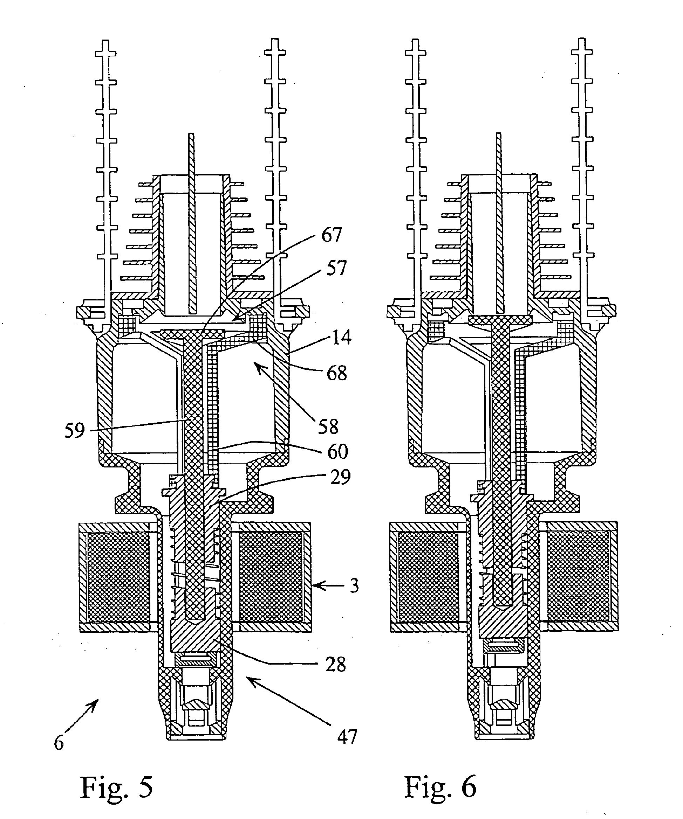

Figs. 5 and 6 show another embodiment of the dosing device according to the invention, whereby the first armature 28 activates the liquid outlet valve 47 in the same way as in the embodiment shown in Figs. 3 and 4. In this embodiment, the first armature 28 also activates a liquid inlet valve 57, but a valve body 67 of the liquid inlet valve 57 is in this embodiment arranged centrally in relation to an annular air intake valve 58 and is connected to the first armature 28 by means of a central rod 59. A valve body 68 of the annular air intake valve 58 is connected to and activated by the second armature 29 by means of three longitudinally extending rods 60 arranged around the central rod 59. Apart from the position of the liquid inlet valve 57 and the air intake valve 58, the function of this embodiment is similar to the embodiment of Figs. 3 and 4.

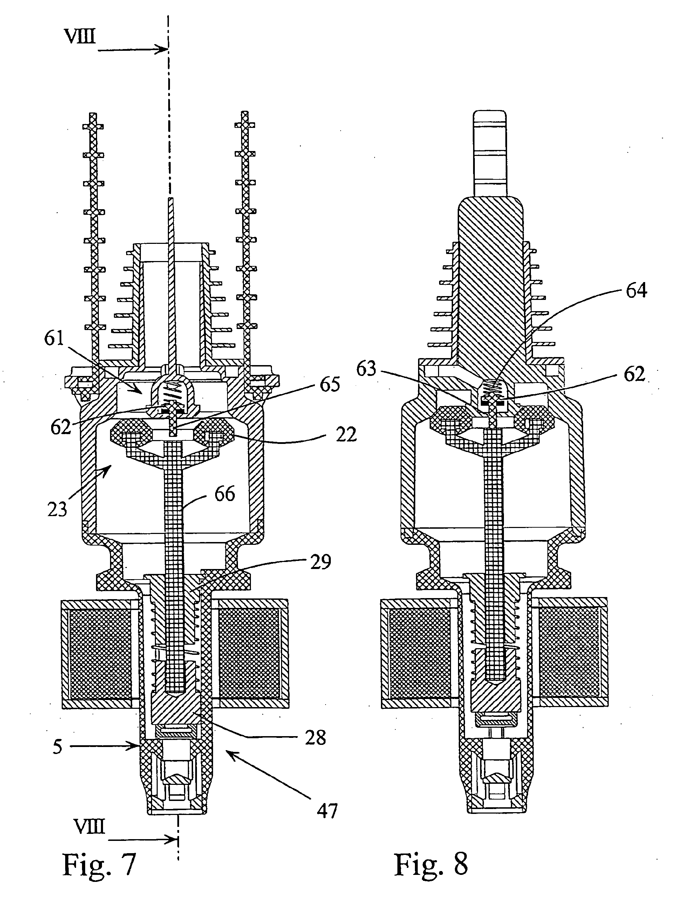

Figs. 7 and 8 show a further embodiment of the dosing device according to the invention, whereby the first armature 28 activates the liquid outlet valve 47 and the liquid inlet valve 23 in the same way as in the embodiment shown in Figs. 3 and 4. However, the second armature 29 is in this embodiment fixed in the axial direction of the outlet spout 5. An air intake valve 61 is in this embodiment also positioned centrally in relation to the annular liquid inlet valve 23, but it is actuated as a slave unit in relation to the liquid inlet valve 23. The air intake valve 61 has a valve body 62 that is biased against a valve seat 63 by means of a pressure spring 64 in the charging state of the dosing device as shown in Fig. 7. In the dispensing state of the dosing device, as shown in Fig. 8, the valve body 62 of the air intake valve is lifted away from its seat 63 by means of a pin 65 protruding from the valve body 62 and abutting the top side of a central rod 66 connecting the first armature 28 and the valve body 22 of the liquid inlet valve 23.

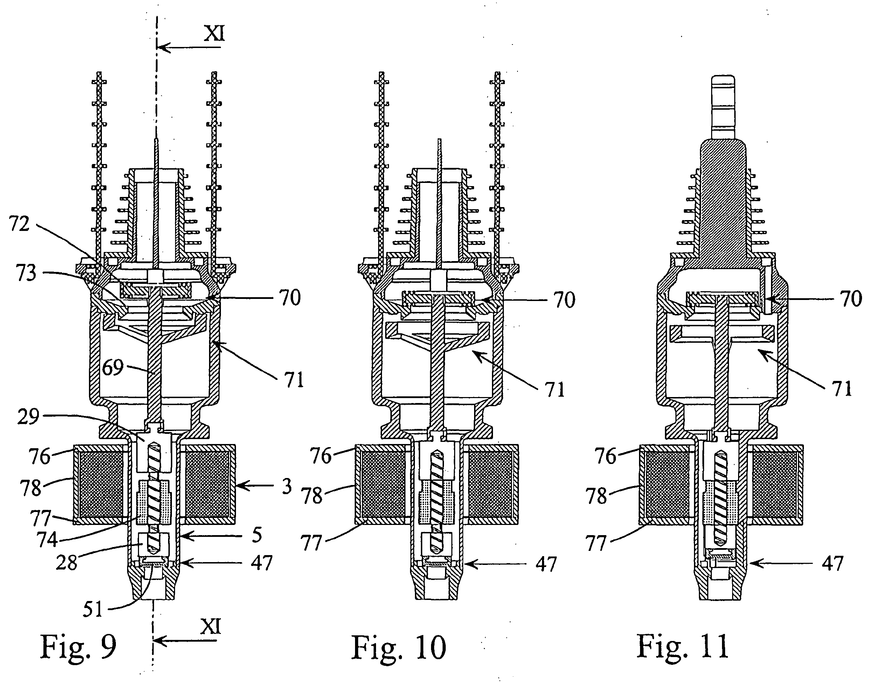

Figs. 9 to 11 show yet another embodiment of the dosing device according to the invention, whereby the first armature 28 activates the liquid outlet valve 47 in the same way as in the embodiment shown in Figs. 3 and 4, and whereby the second armature 29 through a central rod 69 activates a central liquid inlet valve 70 and an annular air intake valve 71. The liquid inlet valve 70 has a disc-shaped valve body 72 mounted on the central rod 69 and adapted to abut an upward valve seat 73. In this embodiment, a further armature 74 is fixed in the outlet spout 5 between the first armature 28 and the second armature 29. When the outlet spout 5 is located in the electromagnetic coil 3, the first armature 28 is positioned outside the electromagnetic coil 3, the second armature 29 is positioned at the level of the top plating 76 of the electromagnetic coil 3, and the third armature 74 is positioned at the level of the bottom plating 77 of the electromagnetic coil 3. When the electromagnetic coil 3 is actuated, this arrangement of the armatures in relation to the electromagnetic coil 3 will cause a stronger attraction force between the third armature 74 and the second armature 29, than between the first armature 28 and the third armature 74, so that the second armature 29 will actuate the liquid inlet valve 70 slightly before the liquid outlet valve 47 is actuated by the first armature 28. This is due to the fact that the first armature 28 is magnetized very little compared to the other two armatures 29, 74. Under certain circumstances, this opening sequence may be an advantage, if a very large overpressure is present in the bottle. Furthermore, the opening sequence may be even better controlled, if the current through and/or the voltage across the electromagnetic coil 3 is increased step by step at the actuation of the dosing device. In this way, a first electromagnetic field of smaller strength may activate the liquid inlet valve only, and a fraction of a second, and preferably less than half a second, later, a second electromagnetic field of larger strength may activate the liquid outlet valve.

Fig. 9 shows the dosing device in the charging state, whereby the liquid outlet valve 47 is closed, the liquid inlet valve 70 is open, and the air intake valve 71 is closed. Fig. 10 shows the dosing device in an intermediate state between the charging state and the dispensing state, whereby the liquid outlet valve 47 is still closed, the liquid inlet valve 70 is also closed, and the air intake valve 71 is open. Fig. 11 shows the dosing device in the dispensing state, whereby the liquid outlet valve 47 has been opened, the liquid inlet valve 70 is closed, and the air intake valve 71 is open.

It should be noted that in the embodiment shown in Figs. 9 to 11, the third armature 74 may be left out, whereby the liquid outlet valve 47 and the liquid inlet valve 70 will be actuated approximately simultaneously. Furthermore, if the third armature 74 is used as a fixed armature, it may alternatively to the position shown in the figures be located at the centre of the electromagnetic coil 3. In this case, the first armature 28 may have a smaller mass than the second armature 29, whereby the second armature may actuate the liquid inlet valve 70 slightly before the first armature 28 activates the liquid outlet valve 47.

The armatures 28, 29, 74 of all embodiments of the dosing device may advantageously be made of stainless magnetic steel, for example 2002, so that contact with foods is unproblematic. Alternatively, the armatures may be encased in plastic. The other parts of the dosing device may advantageously be made of plastic, for example of the type ABS, which is approved for use in connection with foods. The compression spring 30 may be of stainless spring steel.

Advantageously, all valve bodies of the dosing device have a cross-sectional area that is substantially smaller than the cross-sectional area of the dosing chamber, whereby the viscous resistance against displacement of the valve bodies is minimized.

Different doses may be obtained by the employment of differently sized dosing chambers, which may be exchanged according to the requirements.

The embodiments shown in the figures and described above may be combined in any suitable way. It will for instance be possible to employ a third fixed armature as shown in Figs. 9 to 11 also in the embodiments shown in Figs. 3 to 8. In the embodiment shown in Figs. 9 to 11, the air intake valve could alternatively have the form of a slave unit as shown in Figs. 7 to 8.

## Claims

1. A dosing device (6) for mounting on a container, the dosing device comprising a dosing chamber (14) associated with a liquid inlet valve (23, 57, 70) for communication with the container and a liquid outlet valve (47) for communication with a mouth (48) of an outlet spout (5), the outlet spout being arranged adjacent to and having a substantially smaller outer diameter than the dosing chamber, each said valve (23, 57, 70, 47) having a valve body (22, 67, 72, 51) being displaceable between a closed position and an open position by displacement of an armature (28) located in the outlet spout, the armature being displaceable by means of a magnetic field generated by an electromagnetic coil (3) in which the spout may be inserted, the dosing device being operable between a charging state, in which the liquid inlet valve is open, and the liquid outlet valve is closed, and a dispensing state, in which the liquid inlet valve is closed, and the liquid outlet valve is open, and the dosing chamber being provided with an air inlet (40, 42) for communication with the surroundings during the dispensing state of the dosing device, **characterized in that** the spout comprises two armatures (28, 29) adapted to influence each other by means of a magnetic force, and **in that** the air inlet of the dosing chamber is provided with an air intake valve (37) having a valve body (36) operable between a closed position in the charging state of the dosing device and an open position in the dispensing state of the dosing device.

2. A dosing device according to claim 1, **characterized in that** the diameter of the valve body (51) of the liquid outlet valve (47) is smaller than the outer diameter of the outlet spout (5).

3. A dosing device according to claim 1, **characterized in that** a free passage is provided between the dosing chamber (14) and the outlet spout (5) in the charging state of the dosing device.

4. A dosing device according to claim 1, **characterized in that** the valve body (51) of the liquid outlet valve (47) is located at the mouth (48) of the outlet spout (5).

5. A dosing device according to any one of the preceding claims, **characterized in that** the valve body (22, 67, 72) of the liquid inlet valve (23, 57, 70) and the valve body (36, 68, 62) of the air intake valve (37, 58, 61, 71) are arranged concentrically.

6. A dosing device according to any one of the preceding claims, **characterized in that** the valve body (22) of the liquid inlet valve (23) has the form of a ring, and **in that** the valve body (36, 62) of the air intake valve (37, 61) is arranged at the centre of the valve body (22) of the liquid inlet valve (23).

7. A dosing device according to claim 6, **characterized in that** a valve seat for the valve body (22) of the liquid inlet valve (23) is provided in a top wall (16) of the dosing chamber (14) in the form of an outer ring seat (18) and an inner ring seat (19) defining a liquid inlet opening (17) there between, the liquid inlet opening communicating with a mounting portion (9) of the dosing chamber to be inserted in a neck of the container, and **in that** a valve seat (38) for the valve body (36) of the air intake valve (37) is arranged around an air intake opening (39) arranged centrally in the inner ring seat (19) of the liquid inlet valve (23), the air intake opening (39) communicating with the surroundings through an air channel (40) arranged in a cross-member extending radially at the top wall (16) of the dosing chamber (14).

8. A dosing device according to claim 7, **characterized in that** the air channel (40) arranged in the cross-member opens into a peripheral channel (42) arranged in the outer side of the top wall (16) of the dosing chamber (14), the peripheral channel (42) communicating with the surroundings through an opening (43) located at a distance, in the direction of the peripheral channel, from the opening of the radial air channel (40).

9. A dosing device according to any one of the preceding claims, **characterized in that** the armatures (28, 29) are biased away from each other by means of a compression spring (30).

10. A dosing device according to any one of the preceding claims, **characterized in that** the armatures (28, 29) are guided between longitudinal ribs (52) in the outlet spout (5).

11. A dosing device according to any one of the preceding claims, **characterized in that** the valve body (22, 67) of the liquid inlet valve (23, 57) and the valve body (51) of the liquid outlet valve (47) are fixed to at least one common rod (25, 59) displaceable by means of a first one (28) of the two armatures.

12. A dosing device according to claim 11, **characterized in that** the valve body (36) of the air intake valve (37) is fixed to a rod (35) displaceable by means of a second one (29) of the two armatures.

13. A dosing device according to claim 12, **characterized in that** the first armature (28) is connected with the valve body (22) of the liquid inlet valve (23) by means of at least two rods (25) located around the central rod (35) and received in grooves (54) in the second armature (29).

14. A dosing device according to any one of the claims 12 to 13, **characterized in that** the second armature (29) has a collar (55) adapted to abut a projection (56) at the outlet spout (5) in the dispensing state of the dosing device, thereby limiting the displacement of the second armature.

15. A dosing device according to any one of the claims 1 to 10, **characterized in that** the valve body (72) of the liquid inlet valve (70) is displaceable by means of the second armature (29), and **in that** the valve body (51) of the liquid outlet valve (47) is displaceable by means of the first armature (28).

16. A dosing device according to any one of the preceding claims, **characterized in that** a magnetizable third armature (74) is fixed stationarily in the outlet spout (5) between the first armature (28) and the second armature (29).

17. A system for dispensing of liquor or the like, comprising a bottle holder (2) with an electromagnetic coil (3) and a dosing device (6) according to any one of the preceding claims for insertion in the coil, as well as a data processing unit (75) for control of the magnetic field of the coil for dispensing of predefined quantities of liquid and for registration of the number of drinks dispensed.

## Patentansprüche

1. Dosiervorrichtung (6) zur Befestigung an einem Behälter, wobei die Dosiervorrichtung eine Dosierkammer (14) aufweist, die einem Flüssigkeitseinlassventil (23, 57, 70) zur Verbindung mit dem Behälter und einem Flüssigkeitsauslassventil (47) zur Verbindung mit einer Öffnung (48) eines Auslassstutzens (5) zugeordnet ist, wobei der Auslassstutzen benachbart zu der Dosierkammer angeordnet ist und einen wesentlich kleineren Außendurchmesser als diese hat, wobei jedes von dieses Ventilen (23, 57, 70, 47) einen Ventilkörper (22, 67, 72, 51) hat, der durch Verlagerung eines in dem Auslassstutzen angeordneten Ankers (28) zwischen einer geschlossenen Position und einer offenen Position verlagerbar ist, wobei der Anker mit Hilfe eines magnetischen Feldes verlagerbar ist, das durch eine elektromagnetische Spule (3) erzeugt wird, in die der Stutzen eingeführt werden kann, wobei die Dosiervorrichtung zwischen einem Beladungszustand, in dem das Flüssigkeitseinlassventil geöffnet ist und das Flüssigkeitsauslassventil geschlossen ist, und einem Abgabezustand betrieben werden kann, in dem das Flüssigkeitseinlassventil geschlossen ist und das Flüssigkeitsauslassventil geöffnet ist, und wobei die Dosierkammer mit einem Lufteinlass (40, 42) zur Verbindung mit der Umgebung während des Abgabezustands der Dosiervorrichtung ausgestattet ist, **dadurch gekennzeichnet, dass** der Stutzen zwei Anker (28, 29) aufweist, die angepasst sind, um einander mit Hilfe einer magnetischen Kraft zu beeinflussen, und **dadurch**, dass der Lufteinlass der Dosierkammer mit einem Lufteinlassventil (37) ausgestattet ist, das einen Ventilkörper (36) aufweist, der zwischen einer geschlossenen Position in dem Beladungszustand der Dosiervorrichtung und einer geöffneten Position in dem Abgabezustand der Dosiervorrichtung betrieben werden kann.

2. Dosiervorrichtung nach Anspruch 1, **dadurch gekennzeichnet, dass** der Durchmesser des Ventilkörpers (51) des Flüssigkeitsauslassventils (47) kleiner als der Außendurchmesser des Auslassstutzens (5) ist.

3. Dosiervorrichtung nach Anspruch 1, **dadurch gekennzeichnet, dass** zwischen der Dosierkammer (14) und dem Auslassstutzen (5) in dem Beladungszustand der Dosiervorrichtung ein freier Durchgang vorgesehen ist.

4. Dosiervorrichtung nach Anspruch 1, **dadurch gekennzeichnet, dass** der Ventilkörper (51) des Flüssigkeitsauslassventils (47) an der Öffnung (48) des Auslassstutzens (5) angeordnet ist.

5. Dosiervorrichtung nach einem der vorhergehenden Ansprüche, **dadurch gekennzeichnet, dass** der Ventilkörper (22, 67, 72) des Flüssigkeitseinlassventils (23, 57, 70) und der Ventilkörper (36, 68, 62) des Lufteinlassventils (37, 58, 61, 71) konzentrisch angeordnet sind.

6. Dosiervorrichtung nach einem der vorhergehenden Ansprüche, **dadurch gekennzeichnet, dass** der Ventilkörper (22) des Flüssigkeitseinlassventils (23) die Form eines Rings hat, und **dadurch**, dass der Ventilkörper (36, 62) des Lufteinlassventils (37, 61) an dem Zentrum des Ventilkörpers (22) des Flüssigkeitseinlassventils (23) angeordnet ist.

7. Dosiervorrichtung nach Anspruch 6, **dadurch gekennzeichnet, dass** in einer oberen Wand (16) der Dosierkammer (14) ein Ventilsitz für den Ventilkörper (22) des Flüssigkeitseinlassventils (23) in der Form eines äußeren Ringsitzes (18) und eines inneren Ringsitzes (19) vorgesehen ist, die dazwischen eine Flüssigkeitseinlassöffnung (17) bilden, wobei die Flüssigkeitseinlassöffnung mit einem in einen Hals des Behälters einzuführenden Befestigungsabschnitt (9) der Dosierkammer in Verbindung steht, und **dadurch**, dass ein Ventilsitz (38) für den Ventilkörper (36) des Lufteinlassventils (37) um eine Lufteinlassöffnung (39) herum angeordnet ist, die mittig in dem inneren Ringsitz (19) des Flüssigkeitseinlassventils (23) angeordnet ist, wobei die Lufteinlassöffnung (39) durch einen Luftkanal (40) mit der Umgebung in Verbindung steht, der in einem Querelement angeordnet ist, das radial an der oberen Wand (16) der Dosierkammer (14) verläuft.

8. Dosiervorrichtung nach Anspruch 7, **dadurch gekennzeichnet, dass** sich der Luftkanal (40), der in dem Querelement angeordnet ist, in einen Umfangskanal (42) öffnet, der in der Außenseite der oberen Wand (16) der Dosierkammer (14) angeordnet ist, wobei der Umfangskanal (42) durch eine Öffnung (43), die in der Richtung des Umfangskanals in einer Entfernung von der Öffnung des radialen Luftkanals (40) angeordnet ist, mit der Umgebung in Verbindung steht.

9. Dosiervorrichtung nach einem der vorhergehenden Ansprüche, **dadurch gekennzeichnet, dass** die Anker (28, 29) mit Hilfe einer Druckfeder (30) voneinander weg vorgespannt sind.

10. Dosiervorrichtung nach einem der vorhergehenden Ansprüche, **dadurch gekennzeichnet, dass** die Anker (28, 29) zwischen Längsrippen (52) in dem Auslassstutzen (5) geführt sind.

11. Dosiervorrichtung nach einem der vorhergehenden Ansprüche, **dadurch gekennzeichnet, dass** der Ventilkörper (22, 67) des Flüssigkeitseinlassventils (23, 57) und der Ventilkörper (51) des Flüssigkeitsauslassventils (47) an mindestens einer gemeinsamen Stange (25, 59) befestigt sind, die mit Hilfe eines ersten (28) der zwei Anker verlagerbar ist.

12. Dosiervorrichtung nach Anspruch 11, **dadurch gekennzeichnet, dass** der Ventilkörper (36) des Lufteinlassventils (37) an einer Stange (35) befestigt ist, die mit Hilfe eines zweiten (29) der zwei Anker verlagerbar ist.

13. Dosiervorrichtung nach Anspruch 12, **dadurch gekennzeichnet, dass** der erste Anker (28) mit dem Ventilkörper (22) des Flüssigkeitseinlassventils (23) mit Hilfe von mindestens zwei Stangen (25) verbunden ist, die um die zentrale Stange (35) herum angeordnet und in Vertiefungen (54) in dem zweiten Anker (29) aufgenommen sind.

14. Dosiervorrichtung nach einem der Ansprüche 12 bis 13, **dadurch gekennzeichnet, dass** der zweite Anker (29) eine Schulter (55) aufweist, die angepasst ist, um in dem Abgabezustand der Dosiervorrichtung an einem Vorsprung (56) an dem Auslassstutzen (5) anzuliegen und **dadurch** die Verlagerung des zweiten Ankers zu begrenzen.

15. Dosiervorrichtung nach einem der Ansprüche 1 bis 10, **dadurch gekennzeichnet, dass** der Ventilkörper (72) des Flüssigkeitseinlassventils (70) mit Hilfe des zweiten Ankers (29) verlagerbar ist, und **dadurch**, dass der Ventilkörper (51) des Flüssigkeitsauslassventils (47) mit Hilfe des ersten Ankers (28) verlagerbar ist.

16. Dosiervorrichtung nach einem der vorhergehenden Ansprüche, **dadurch gekennzeichnet, dass** zwischen dem ersten Anker (28) und dem zweiten Anker (29) ein magnetisierbarer dritter Anker (74) stationär in dem Auslassstutzen (5) befestigt ist.

17. System zur Abgabe von Flüssigkeit oder dergleichen, das einen Flaschenhalter (2) mit einer elektromagnetischen Spule (3) und eine Dosiervorrichtung (6) gemäß einem der vorhergehenden Ansprüche zur Einführung in die Spule sowie eine Datenverarbeitungseinheit (75) zur Steuerung des magnetischen Feldes der Spule zur Abgabe vordefinierter Mengen von Flüssigkeit und zur Erfassung der Anzahl abgegebener Getränke aufweist.

## Revendications

1. Dispositif de dosage (6) destiné à être monté sur un conteneur, le dispositif de dosage comprenant une chambre de dosage (14) associée à une soupape d'admission de liquide (23, 57, 70) pour communiquer avec le conteneur et une soupape de sortie de liquide (47) pour communiquer avec une embouchure (48) d'un bec verseur de sortie (5), le bec verseur de sortie étant disposé de façon adjacente à, et présentant un diamètre extérieur sensiblement plus petit que, la chambre de dosage, chaque dite soupape (23, 57, 70, 47) comportant un corps de soupape (22, 67, 72, 51) pouvant être déplacé entre une position fermée et une position ouverte par le déplacement d'une armature (26) située dans le bec de sortie, l'armature pouvant être déplacée au moyen d'un champ magnétique généré par une bobine électromagnétique (3) dans laquelle le bec peut être inséré, le dispositif de dosage pouvant agir entre un état de chargement, dans lequel la soupape d'admission de liquide est ouverte, et la soupape de sortie de liquide est fermée, et un état de distribution dans lequel la soupape d'admission de liquide est fermée et la soupape de sortie de liquide est ouverte, et la chambre de dosage étant pourvue d'un orifice d'admission d'air (40, 42) pour communiquer avec le milieu environnant pendant l'état de distribution du dispositif de dosage, **caractérisé en ce que** le bec verseur comprend deux armatures (28, 29) adaptées pour agir l'une sur l'autre par l'intermédiaire d'une force magnétique, et **en ce que** l'orifice d'admission d'air de la chambre de dosage est doté d'une soupape de prise d'air (37) comportant un corps de soupape (36) pouvant agir entre une position fermée à l'état de chargement du dispositif de dosage et une position ouverte à l'état de distribution du dispositif de dosage.

2. Dispositif de dosage selon la revendication 1, **caractérisé en ce que** le diamètre du corps de soupape (51) de la soupape de sortie de liquide (47) est plus petit que le diamètre extérieur du bec verseur de sortie (5).

3. Dispositif de dosage selon la revendication 1, **caractérisé en ce qu'**un passage libre est prévu entre la chambre de dosage (14) et le bec de sortie (5) à l'état de chargement de la chambre de dosage.

4. Dispositif de dosage selon la revendication 1, **caractérisé en ce que** le corps de soupape (51) de la soupape de sortie de liquide (47) est situé au niveau de l'embouchure (48) du bec de sortie (5).

5. Dispositif de dosage selon l'une quelconque des revendications précédentes, **caractérisé en ce que** le corps de soupape (22, 67, 72,) de la soupape d'admission de liquide (23, 57, 70) et le corps de soupape (36, 68, 62) de la soupape de prise d'air (37, 58, 61, 71) sont disposés de façon concentrique.

6. Dispositif de dosage selon l'une quelconque des revendications précédentes, **caractérisé en ce que** le corps de soupape (22) de la soupape d'admission de liquide (23) présente la forme d'un anneau, et **en ce que** le corps de soupape (36, 62) de la soupape de prise d'air (37, 61) est disposé au centre du corps de soupape (22) de la soupape d'admission de liquide (23).

7. Dispositif de dosage selon la revendication 6, **caractérisé en ce qu'**un siège de soupape destiné au corps de soupape (22) de la soupape d'admission de liquide (23) est prévu dans une paroi supérieure (16) de la chambre de dosage (14) sous la forme d'une embase annulaire extérieure (18) et d'une embase annulaire intérieure (19) définissant entre eux une ouverture d'admission de liquide (17), l'ouverture d'admission de liquide communiquant avec une partie de fixation (9) de la chambre de dosage en vue d'être insérée dans un col du conteneur, et **en ce qu'**un siège de soupape (38) destiné au corps de soupape (36) de la soupape de prise d'air (37) est agencé autour d'une ouverture de prise d'air (39) disposée de façon centrale dans le siège annulaire intérieur (19) de la soupape d'admission de liquide (23), l'ouverture de prise d'air (39) communiquant avec le milieu environnant à travers un évent d'aération (40) disposé dans un élément transversal s'étendant radialement au niveau de la paroi supérieure (16) de la chambre de dosage (14).

8. Dispositif de dosage selon la revendication 7, **caractérisé en ce que** l'évent d'aération (40) disposé dans l'élément transversal s'ouvre dans une gorge périphérique (42) disposée dans le côté extérieur de la paroi supérieure (16) de la chambre de dosage (14), la gorge périphérique (42) communiquant avec le milieu environnant par une ouverture (43) située à une certaine distance, dans la direction de la gorge périphérique, à partir de l'ouverture de l'évent d'aération radial (40).

9. Dispositif de dosage selon l'une quelconque des revendications précédentes, **caractérisé en ce que** les armatures (28, 29) sont rappelées élastiquement à l'écart l'une de l'autre au moyen d'un ressort à compression (30).

10. Dispositif de dosage selon l'une quelconque des revendications précédentes, **caractérisé en ce que** les armatures (28, 29) sont guidées entre des nervures longitudinales (52) dans le bec de sortie (5).

11. Dispositif de dosage selon l'une quelconque des revendications précédentes, **caractérisé en ce que** le corps de soupape (22, 67) de la soupape d'admission de liquide (23, 57) et le corps de soupape (51) de la soupape de sortie de liquide (47) sont fixés à au moins une tige commune (25, 59) pouvant être déplacée au moyen de la première (28) des deux armatures.

12. Dispositif de dosage selon la revendication 11, **caractérisé en ce que** le corps de soupape (36) de la soupape de prise d'air (37) est fixé à une tige (35) pouvant être déplacée au moyen de la seconde (29) des deux armatures.

13. Dispositif de dosage selon la revendication 12, **caractérisé en ce que** la première armature (28) est raccordée au corps de soupape (22) de la soupape d'admission de liquide (23) au moyen d'au moins deux tiges (25) placées autour de la tige centrale (35) et logées dans des gorges (54) de la seconde armature (29).

14. Dispositif de dosage selon l'une quelconque des revendications 12 à 13, **caractérisé en ce que** la seconde armature (29) possède un collier (55) adapté pour venir en butée contre une partie en saillie (56) au niveau du bec de sortie (5) à l'état de distribution du dispositif de dosage, de façon à limiter le déplacement de la seconde armature.

15. Dispositif de dosage selon l'une quelconque des revendications 1 à 10, **caractérisé en ce que** le corps de soupape (72) de la soupape d'admission de liquide (70) peut être déplacé au moyen de la seconde armature (29), et **en ce que** le corps de soupape (51) de la soupape de sortie de liquide (47) peut être déplacé au moyen de la première armature (28).

16. Dispositif de dosage selon l'une quelconque des revendications précédentes, **caractérisé en ce qu'**une troisième armature pouvant être aimantée (74) est fixée de façon permanente dans le bec de sortie (5) entre la première armature (28) et la seconde armature (29).

17. Système pour distribuer de la liqueur ou analogue, comportant un support de bouteille (2) équipé d'une bobine électromagnétique (3) et d'un dispositif de dosage (6) selon l'une quelconque des revendications précédentes destiné à être inséré dans la bobine, de même que d'une unité de traitement de données (75) permettant de commander le champ magnétique de la bobine en vue de distribuer des quantités prédéfinies de liquide et servant à enregistrer le nombre versé de verres.
